# EUROPÄISCHE PATENTSCHRIFT

(11) **EP 4 482 772 B1**
(45) Veröffentlichungstag und Bekanntmachung des Hinweises auf die Patenterteilung: **10.12.2025**
(21) Anmeldenummer: 23707361.4
(22) Anmeldetag: 24.02.2023
(51) Int. Cl.: B65H 54/52, B65H 54/553, B65H 54/44, B65H 63/08, F16H 1/12

(54) **SPULVORRICHTUNG MIT EINEM SCHWENKANTRIEB**
WINDING APPARATUS WITH A SWIVEL DRIVE DEVICE
APPAREIL D'ENROULEMENT AVEC UN DISPOSITIF D'ENTRAÎNEMENT PIVOTANT

(30) Priorität: 25.02.2022 CH 1862022
(43) Veröffentlichungstag der Anmeldung: 01.01.2025
(73) Patentinhaber: SSM Schärer Schweiter Mettler AG, 8820 Wädenswil (CH)
(72) Erfinder: KÜTTEL, Martin, 8136 Gattikon (CH); WANDELER, André, 8833 Samstagern (CH)
(74) Vertreter: Rieter
(86) Internationale Anmeldenummer: PCT/EP2023/054674
(87) Internationale Veröffentlichungsnummer: WO 2023/161413

(56) Entgegenhaltungen:
- WO-A1-2019/007729
- WO-A1-2021/224750
- US-A- 6 135 383
- US-A1- 2019 285 140

## Beschreibung

Die vorliegende Erfindung betrifft eine Spulvorrichtung zum Aufspulen eines Fadens auf eine Spulenhülse zur Bildung einer Spule, mit zumindest einem Schwenkarm mit einer Schwenkachse und mit einer am Schwenkarm angeordneten Hülsenaufnahme und mit einer Stützwalze zur Auflage der Spulenhülse, wobei ein Schwenkantrieb zur Bewegung des Schwenkarms um die Schwenkachse vorgesehen ist.

Gattungsgemässe Schwenkantriebe werden in Textilmaschinen verschiedener Bauart eingesetzt, beispielsweise Endspinnmaschinen, Umspulmaschinen oder Spulmaschinen. Dabei sind die Spule, respektive die Spulenhülse, zwischen zwei Haltearmen oder auf einem Spuldorn drehbar gelagert. Die beiden Haltearme respektive der Spuldorn wiederum sind ihrerseits in einem gemeinsamen Schwenkarm mit einer Schwenkachse gehalten. Zu Beginn eines Spulvorganges (einer sogenannten Spulreise) liegt die Spulenhülse auf einer Stützwalze auf und wird über einen Antrieb in Drehung versetzt, wodurch ein zwischen die Stützwalze und die Spulenhülse zugeführter Faden oder ein Garn auf die Spulenhülse aufgewickelt und eine Spule gebildet wird. Zum Einsatz kommen verschiedenste Arten von Spulhülsen in zylindrischer oder konischer Form aus unterschiedlichen Materialien, beispielsweise Kunststoff oder Papier. Die Spulhülsen können mit oder ohne seitliche Flansche ausgeführt sein. Abhängig von einer verwendeten Spulenhülse sind auch Ausführungen der Stützwalze bekannt, bei welchen die Stützwalze zur Anpassung an die Bauform der Spulenhülse entlang ihrer Achse, während eines Spulvorganges verschoben wird. Das Garn wird, während der Aufwicklung, mit einer Changierung entlang einer Längsachse der Spulenhülse hin und her bewegt, wodurch verschiedenartige Wicklungen in Aufbau und Form gebildet werden. Der Antrieb der Spulenhülse erfolgt direkt über einen Motor, der zumindest eine der Hülsenaufnahmen oder den Spulendorn in Drehung versetzt, oder indirekt über eine parallel zur Spulenhülse angeordnete Reibwalze. Die Reibwalze dient dabei gleichzeitig als Stützwalze. Die Reibwalze kann dabei als sogenannte Nutentrommel oder Schlitztrommel ausgeführt sein. Bei einem direkten Antrieb der Spulenhülse ist die Changierung des Fadens durch eine separate Verlegeeinheit und eine Abstützung der Spulenhülse über eine separate Stützwalze vorgesehen. Das Garn wird dabei zwischen der Stützwalze und der Spulenhülse respektive dem sich bereits auf der Spulenhülse befindlichen Garn geklemmt und dadurch auf der Spulenhülse abgelegt.

Durch den Spulvorgang nimmt ein Durchmesser der entstehenden Spule durch den auf die Spulenhülse aufgewickelten Faden stetig zu. In der Folge vergrössert sich der Abstand zwischen der Stützwalze und der Längsachse der Spulenhülse. Aus dem Stand der Technik sind Spulvorrichtungen bekannt welche für diese Bewegung mit einem Schwenkantrieb ausgerüstet sind. Ebenfalls bekannt ist, dass Schwenkantriebe mit einer Winkelmessung ausgerüstet sein können, wodurch eine entsprechende Steuerung jederzeit weiss, in welcher Stellung sich der Schwenkantrieb respektive die Spulenhülse befindet.

Die CN 206 692 118 U offenbart einen Schwenkantrieb bei welchem die Schwenkachse indirekt von einem Motor angetrieben wird. Die Bewegung des Motors wird über einen Riementrieb auf den Schwenkarm übertragen. Im Gegensatz dazu offenbart beispielsweise die EP 3 649 069 A1 einen Schwenkantrieb, welcher einen direkten Antrieb der Schwenkachse vorsieht. Dabei ist ein Elektromotor über ein Planetenspiralgetriebe mit der Schwenkachse gekoppelt. Nachteilig dabei ist, dass ein für die Entnahme einer vollen Spule notwendiges Schwenken der Spule die Selbsthemmung des Antriebes überwunden werden muss oder das Schwenken durch den Antrieb selbst zu erfolgen hat.

Ebenfalls bekannt sind Spulvorrichtungen bei welchen der Schwenkantrieb keinen eigenen Antrieb aufweist, dabei wird die Spulenhülse allein durch eine Vergrösserung des Spulendurchmessers während einer Spulreise um die Schwenkachse verschwenkt. Beispielsweise offenbart die EP 1 820 764 A1 eine derartige Spulvorrichtung. Um eine gleichmässige Bewegung des Schwenkarmes zu erreichen, wird die Spulenhülse respektive die Spule mit einem pneumatischen Zylinder gegen die Nutentrommel gepresst. In einer alternativen Lösung offenbaren beispielsweise die DE 198 17 363 A1 oder die US 6,405,968 B2 eine Regulierung einer Anpresskraft zwischen der Nutentrommel und der Spule durch ein Aufbringen eines Drehmomentes mittels eines Antriebs der Schwenkachse über einen Schrittmotor erreicht wird, wobei eine Schwenkbewegung des Schwenkarmes durch die im Durchmesser wachsende Spule selbst bewirkt wird. WO 2021/224750 A1 offenbart eine Spulvorrichtung gemäß dem Oberbegriff des Anspruchs 1. Aus der US 2019/285140 A1 ist eine Getriebevorrichtung bekannt.

Nachteilig an den bekannten Ausführungen der bekannten Schwenkantriebe ist zudem, dass eine durch deren Konstruktion bedingte eingeschränkte Wiederholbarkeit einerseits bei direkten Antrieben durch deren Selbsthemmung oder Elastizität bei Riementrieben gegeben ist.

Aufgabe der vorliegenden Erfindung ist es somit, einen Schwenkantrieb für eine Spulvorrichtung zum Aufspulen eines Fadens auf eine Spulenhülse vorzuschlagen, welcher durch seine Spielfreiheit eine exakte Bewegung ermöglicht.

Die Aufgabe wird gelöst durch eine Spulvorrichtung mit den Merkmalen des unabhängigen Patentanspruchs.

Vorgeschlagen wird ein Schwenkantrieb für eine Spulvorrichtung zum Aufspulen eines Fadens auf eine Spulenhülse zur Bildung einer Spule, wobei der Schwenkantrieb eine Antriebsachse und eine Schwenkachse und einen in der Antriebsachse angeordneten Motor und eine erste Getriebestufe und eine zweite Getriebestufe mit einem Getriebeabgang in der Schwenkachse aufweist, wobei in beiden Getriebestufen jeweils ein Kronenrad vorgesehen ist. Getriebe mit Kronenrädern sind von ihrer Bauart Winkelgetriebe. Dabei ist bei Kronenradgetrieben ein hoher Wirkungsgrad von über 90% erreichbar. Bei einem Kronenradgetriebe wirkt Kronenrad mit einem Zylinderrad zusammen, wodurch hohe Untersetzungen erreichbar sind. Auch ist durch eine entsprechende Verzahnung ein spielfreier Übertrag der Drehung des Kronenrades auf das Zylinderrad und umgekehrt möglich. Beispielsweise kommen für das Zylinderrad Gerad- oder Schrägverzahnungen zur Anwendung. Neben der Spielfreiheit sind Kronenradgetriebe aufgrund ihrer Bauart nicht empfindlich auf geringfügige Winkelverschiebungen. Dies hat den Vorteil, dass Erschütterungen, welche von der Spulvorrichtung auf den Schwenkantrieb übertragen werden können, keinen Einfluss auf die Betriebssicherheit der Getriebestufen haben.

Bevorzugterweise ist eine Verbindung zwischen dem Motor und dem ersten Kronenrad der ersten Getriebestufe über ein erstes Ritzel vorgesehen, wobei das erste Ritzel verdrehsicher mit einem Rotor des Motors verbunden ist. Das erste Ritzel bildet zusammen mit dem ersten Kronenrad die erste Getriebestufe. Als Ritzel wird ein verzahntes Zylinderrad mit einer fest daran gehaltenen Achse bezeichnet. Achse und Zylinderrad können auch einstückig sein. Die Verzahnung des Zylinderrades kann als Gerad-, Schräg-Bogen- oder Winkelverzahnung vorgesehen werden. Durch die Zwischenschaltung des Ritzels wird zwischen dem Motor und dem ersten Kronenrad eine hohe erste Untersetzung von bis zu 1 zu 10 erreicht. In der zweiten Getriebestufe ist ebenfalls ein zweites Kronenrad und ein zugehöriges zweites Ritzel vorgesehen. Wobei auch in der zweiten Getriebestufe eine Untersetzung von bis zu 1 zu 10 erreichbar ist. Durch die Verbindung der ersten Getriebestufe mit der zweiten Getriebestufe ergibt sich für den vorgeschlagenen Schwenkantrieb eine Untersetzung von bis zu 1 zu 100. Dabei ergibt sich bei einer Untersetzung von beispielsweise 1 zu 90 für eine Drehung um eine Schwenkachse um 2 Winkelgrade eine halbe Drehung des Motors. Es hat sich herausgestellt, dass eine Gesamtuntersetzung in einem Bereich von 1 zu 16 bis zu 1 zu 64 für den Betrieb einer Spulvorrichtung zu bevorzugen ist. Dadurch sind sehr feine Veränderungen einer Position der Schwenkachse möglich.

Vorteilhafterweise stehen die Kronenräder der ersten Getriebestufe und der zweiten Getriebestufe über ein zweites Ritzel in Wirkverbindung, wobei das erste Kronenrad der ersten Getriebestufe und das zweite Ritzel der zweiten Getriebestufe über eine gemeinsame Achse verbunden sind. Über das erste Zylinderrad des ersten Ritzels wird ein erstes Kronenrad angetrieben. Das erste Ritzel und das erste Kronenrad bilden die erste Getriebestufe. Dadurch dass das erste Kronenrad auf einer mit einem zweiten Ritzel gemeinsamen Achse drehfest gehalten ist, haben das erste Kronenrad und das zweite Zylinderrad dieselbe Drehzahl. Durch eine gemeinsame Achse wird eine einfache Konstruktion erreicht. Zwischen dem zweiten Ritzel und dem ersten Kronenrad kann eine Kupplung vorgesehen sein. Dies hat den Vorteil, dass die beiden Getriebestufen separat voneinander gebaut oder auch ersetzt werden können. Im Sinne dieser Patentanmeldung gelten die über eine Kupplung verriegelten Achsen des ersten Kronenrades und des zweiten Ritzels als gemeinsame Achse. Über dieses zweite Ritzel respektive das zweite Zylinderrad wird nun das zweite Kronenrad angetrieben. Eine Achse des zweiten Kronenrades stellt eine Abgangswelle des Schwenkantriebs dar. Mit der Achse des zweiten Kronenrades kann eine Schwenkachse einer entsprechenden Spulvorrichtung verbunden sein.

Bevorzugterweise weist der Motor eine Winkelmessung auf. Mit der Winkelmessung des Motors kann nach einer Umrechnung über die Getriebestufen eine genaue Position der Schwenkachse ermittelt werden. Über die Position der Schwenkachse kann eine Steuerung einen Durchmesser der Spule errechnen und daraus die Zeitdauer bis zur Fertigstellung einer Spule. Alternativ kann eine Winkelmessung auch direkt auf der Schwenkachse vorgesehen sein, diese ist jedoch ungenauer, da die Schwenkachse jeweils nur wenige Winkelminuten verdreht wird, entsprechend dem zunehmenden Durchmesser der Spule.

Erfindungsgemäß wird eine Spulvorrichtung zum Aufspulen eines Fadens auf eine Spulenhülse vorgeschlagen. Die Spulvorrichtung weist zumindest einen Schwenkarm mit einer Schwenkachse und eine am Schwenkarm angeordneten Hülsenaufnahme und eine Stützwalze zur Auflage der Spulenhülse auf, wobei ein Schwenkantrieb zur Bewegung des Schwenkarms um die Schwenkachse nach der vorherigen Beschreibung vorgesehen ist. Die Hülsenaufnahme kann in Form eines Spulendorns ausgeführt werden. Als Stützwalze kommen einfache drehbare Stützwalzen oder angetriebene Reibwalzen sowie Nutentrommeln zu Anwendung. In einer bevorzugten Ausführung ist ein Antrieb des Spuldorns auf dem Hebelarm angeordnet. Das zusätzliche Gewicht dieses Antriebs, welches ebenfalls die Aufliegekraft der Spulenhülse auf der Stützwalze beeinflusst, kann durch die entsprechende Bewegung des Schwenkantriebs aufgefangen werden. Durch diesen Direktantrieb des Spuldorns anstelle eines indirekten Antriebs der Spule mit Hilfe der Stützwalze ist eine schlupffreie Regelung der Spulgeschwindigkeit möglich. Auch entstehen weniger Verluste in Form von Reibung und mechanischer Übertragung, was zu einem geringeren Energieverbrauch des Spulenantriebs führt. Vorteilhafterweise ist eine Steuerung vorgesehen ist, wobei in der Steuerung eine Eingabe einer Garnstärke vorgesehen ist. Wenn die Garnstärke der Steuerung bekannt ist, kann durch die Steuerung eine notwendige Bewegung des Schwenkarmes während einer Spulreise berechnet werden. Nach einer Auflage einer Windung auf die Spule wird der Schwenkarm um die Garnstärke verschwenkt. Eine Komplettierung einer Windung ist der Steuerung durch die Umdrehungen der Spule und eine Changierung des Fadens bekannt.

Bevorzugterweise ist eine Kraftmessung vorgesehen zur Ermittlung einer auf den Schwenkarm einwirkenden Auflagekraft. Mit Hilfe der Kraftmessung wird eine Grösse festgestellt, welche unter Berücksichtigung der maschinentechnischen Gegebenheiten direkt proportional zur Auflagekraft der Spulenhülse respektive der Spule auf der Stützwalze ist. Dabei wird nicht die Auflagekraft zwischen der Spule respektive Spulenhülse und der Stützwalze direkt gemessen, sondern die Kraft, welche auf den Schwenkarm wirkt. Dabei ist ein Eigengewicht vom Schwenkarm zusammen mit einem allfällig vorhandenen Antrieb des Spuldorns sowie des Spuldorns selbst in ihrem Einfluss auf die Kraftmessung zu berücksichtigen. Die daraus auf die Kraftmessung wirkenden Kräfte verändern sich bei zunehmendem Durchmesser der Spule durch die Schwenkbewegung des Schwenkarmes und einer damit einhergehenden Veränderung einer horizontalen Distanz zwischen dem Spuldorn und der ortsfest angebrachten Drehachse des Schwenkarmes.

Die Kraftmessung kann als hydraulische oder mechanische Kraftmessung ausgeführt sein. Vorteilhafterweise ist die Kraftmessung als eine zwischen zwei Teilen des Schwenkarmes angeordnete Kraftmessdose ausgeführt. Dies ermöglicht eine einfache und kompakte Bauweise, auch ist eine Kraftmessdose auf einfache Art direkt mit einer Steuerung koppelbar. In Kraftmessdosen können verschiedene Bauarten von sogenannten Kraftaufnehmern zur Anwendung kommen. Beispielsweise ist die Verwendung von Kraftaufnehmern bekannt, bei welchen die Kraft auf einen elastischen Federkörper einwirkt und diesen verformt. Die Verformung des Federkörpers wird über Dehnungsmessstreifen, deren elektrischer Widerstand sich mit der Dehnung ändert, in die Änderung einer elektrischen Spannung umgewandelt. Über einen Messverstärker werden die elektrische Spannung und damit die Dehnungsänderung registriert. Diese kann aufgrund der elastischen Eigenschaften des Federkörpers in einen Kraftmesswert umgerechnet werden. Als Federkörper werden Biegebalken, Ringtorsionsfedern oder andere Bauformen eingesetzt. In einer weiteren Bauart von Wägezellen werden Piezokeramikelemente eingesetzt. Dabei bilden sich durch die gerichtete Verformung eines piezoelektrischen Materials mikroskopische Dipole innerhalb der Elementarzellen des Piezokristalls. Die Aufsummierung über das damit verbundene elektrische Feld in allen Elementarzellen des Kristalls führt zu einer makroskopisch messbaren elektrischen Spannung, welche in einen Kraftmesswert umgerechnet werden kann. Kraftmessdosen sind aus dem Stand der Technik bekannt und finden heute weite Verbreitung in der Kraft- und Gewichtsmessung. Alternativ zur Anordnung der Kraftmessung im Schwenkarm kann eine Kraftmessung direkt über der Achse des Schwenkarmes erfolgen. Dabei ist die Achse gleichzeitig zur Funktion einer schwenkbaren Verbindung zwischen der Halterung und dem Schwenkarm als krafteinleitendes Bauteil einer Kraftmessung ausgeführt.

Vorteilhafterweise wird durch die Steuerung aufgrund der Kraftmessung eine Bewegung des Schwenkarmes um die Schwenkachse bestimmt, derart, dass die Auflagekraft der Spule auf der Stützwalze konstant ist. Durch die konstanten Druckverhältnisse während eines Spulvorganges ist eine exakte Berechnung der ausgespulten Fadenlänge möglich. Über die gesamte Spulreise wird aufgrund der konstanten Auflagekraft eine gleichmässige Spuldichte erreicht, womit ein konstantes Verhältnis von Garnstärke zu Spuldurchmesser gegeben ist.

Bevorzugterweise sind zwei Schwenkarme mit einer gemeinsamen Schwenkachse und mit jeweils am Schwenkarm angeordneten Hülsenaufnahmen und mit einer Stützwalze zur Auflage der Spulenhülse vorgesehen. Dadurch ergibt sich der Vorteil, dass grössere Spulen erzeugt werden können, da durch die zweiseitige Lagerung der Spulenhülse eine Kraftverteilung auf zwei Schwenkarme erfolgt und eine grössere Laufruhe der Spule erreicht wird.

Bevorzugterweise ist eine Spulmaschine respektive eine Umspulmaschine mit einer Spulvorrichtung nach obiger Beschreibung ausgerüstet, was die Maschine selbst einfach in der Bedienung und kostengünstig in der Herstellung macht. Bei Erreichen eines vorgegebenen Spulendurchmessers wird die Spulung gestoppt und die Spule durch den Schwenkantrieb von der Stützwalze abgehoben. Der vorgegebene Spulendurchmesser kann auf verschiedene Arten festgestellt werden. Es kann über die Spulgeschwindigkeit die Länge des aufgespulten Fadens festgestellt respektive berechnet und damit auf den aktuellen Spulendurchmesser geschlossen werden. Weiter ist es auch möglich die Auslenkung des Schwenkhebels sensorisch zu erfassen und daraus auf den Spulendurchmesser zu schliessen. Unter dem Begriff Erreichen eines vorgegebenen Spulendurchmessers kann somit auch die Vorgabe einer bestimmten Fadenlänge, Dauer einer Spulung oder Schwenkgrad des Schwenkarmes verstanden werden. Ist die Spule abgehoben kann diese manuell oder mit Hilfe eines Entnahmeautomaten vom Spulendorn abgenommen werden nachdem, respektive während, die Spannvorrichtung des Spuldorns manuell oder automatisch gelöst wurde. Im angehobenen Zustand kann ein Endgewicht der fertigen Spule über die Kraftmessung festgestellt werden.

Weitere Vorteile der Erfindung sind im nachfolgenden Ausführungsbeispiel beschrieben. Es zeigen:
- **Figur 1**: eine schematische Draufsicht einer ersten Ausführungsform einer Spulvorrichtung nach der Erfindung;
- **Figur 2**: eine schematische Seitenansicht der Spulvorrichtung in Richtung X nach Figur 1;
- **Figur 3**: eine schematische Darstellung einer Ausführungsform eines Schwenkantriebes und
- **Figur 4**: eine schematische Draufsicht einer zweiten Ausführungsform einer Spulvorrichtung nach der Erfindung.

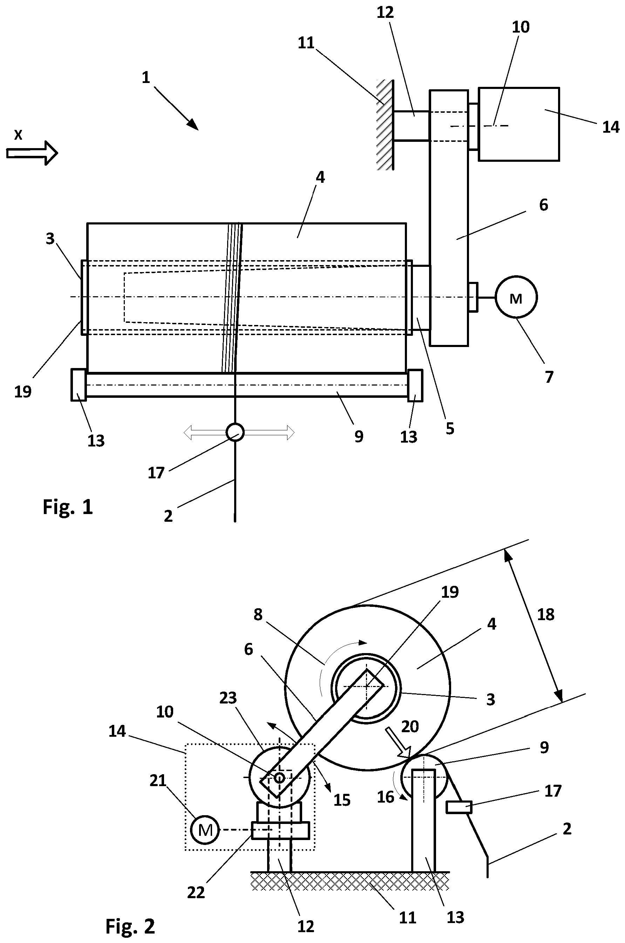

Figur 1 zeigt eine schematische Draufsicht und Figur 2 eine schematische Seitenansicht in Richtung X der Figur 1 einer ersten Ausführungsform einer Spulvorrichtung 1 zur Spulung von einem Faden 2 oder einem Garn auf eine Spulenhülse 3 zur Bildung einer Spule 4. Die Spulvorrichtung 1 umfasst eine Hülsenaufnahme 5 welche an einem Schwenkarm 6 drehbar gelagert ist. In der gezeigten Ausführungsform wird die Hülsenaufnahme 5 von einem ebenfalls am Schwenkarm 6 gehaltenen Spulenantrieb 7 in Drehung versetzt. In der Hülsenaufnahme 5 wird mit Hilfe einer Spannvorrichtung (nicht gezeigt) die Spulenhülse 3 drehfest gehalten, sodass über die Hülsenaufnahme 5 auch die Spulenhülse 3 und damit die sich auf der Hülsenaufnahme 5 befindliche Spule 4 in Rotation 8 versetzt werden. Während eines Spulvorganges wird die Spulenhülse 3 respektive die Spule 4 auf einer Stützwalze 9 abgestützt. Alternativ zu oben beschriebener Antriebsform wäre ein Reib-Antrieb der Spulenhülse 3 respektive der Spule 4 über eine angetriebene Stützwalze 3. Der Schwenkarm 6 ist in einer Schwenkachse 10 an einem Maschinengestell 11 durch eine entsprechende Abstützung 12 ortsfest gehalten und drehbar gelagert. An einem der Schwenkachse 10 gegenüberliegenden Ende des Schwenkarmes 6 ist die Hülsenaufnahme 5 mit dem zugehörigen Spulantrieb 7 befestigt. Die Stützwalze 9 ist in der gezeigten Ausführung in Supporten 13 drehbar im Maschinengestell 11 gehalten. Die Stützwalze 9 ist mit ihrer Achse parallel zu einer äusseren Oberfläche der Spulenhülse 3 respektive der Spule 4 angeordnet. Der Schwenkarm 6 wird durch einen Schwenkantrieb 14 um die Schwenkachse 10 gedreht, was zur Folge hat, dass die Spulenhülse 3 in ihrem Abstand zur Stützwalze 9 verändert wird. Die Spulenhülse 3 kommt aufgrund einer Schwenkbewegung 15 des Schwenkarmes 6 um die Schwenkachse 10 während eines Spulvorganges auf der Stützwalze 9 zur Anlage. Durch die Rotation 8 der Spulenhülse 3 in einer entsprechenden Drehrichtung wird ein an die Spulenhülse 3 angelegter Faden 2 auf die Spulenhülse 3 aufgewickelt und eine Spule 4 ausgebildet. Dabei wird über die Auflage der Spule 4 auf der Stützwalze 9 auch die Stützwalze 9 in eine Drehung in der entsprechenden Drehrichtung 16 versetzt. Während dieses Aufwickelvorganges, der sogenannten Spulreise, wird mit einer Changierung 17 der Faden 2 entlang einer Spulenachse 19 der Spulenhülse 3 hin und her bewegt. Mit Hilfe dieser Bewegungsrichtung der Changierung 17 können auf der Spulenhülse 3 verschiedenartige Wicklungen respektive Spulen 4 erzeugt werden. Durch die Bildung einer Wicklung auf der Spulenhülse 3 nimmt die Spule 4 in ihrem Durchmesser 18 zu, wodurch aufgrund der Anlage auf der Stützwalze 9 die Hülsenaufnahme 5 und damit der Schwenkarm 6 von der Stützwalze 9 um die Schwenkachse 10 von der Stützwalze 9 weg geschwenkt wird.

Während des Aufwickelvorganges wird der Faden 2 zwischen der Spulenhülse 3 respektive dem auf der Spulenhülse 3 bereits aufgewickelten Faden 2 und der Stützwalze 9 geklemmt, sodass sich eine enganliegende Wicklung auf der Spulenhülse 3 ergibt. Eine dabei aufgebrachte Klemmkraft respektive Auflagekraft 20 nimmt durch das Eigengewicht der grösser werdenden Spule 4 während eines Aufwickelvorganges ständig zu. Um eine konstante Auflagekraft 20 gewährleisten zu können wird durch den Schwenkantrieb 14 der Schwenkarm 6 um die Schwenkachse 10 bewegt und dadurch die Spule 4 von der Stützwalze 9 abgehoben. Dieses Abheben wird jedoch nur so weit ausgeführt, dass eine vorbestimmte Auflagekraft 20 zwischen der Spule 4 und der Stützwalze 9 bestehen bleibt. Der Schwenkantrieb 14 ist in der Schwenkachse 10 mit dem Schwenkarm 6 drehfest verbunden. Der Schwenkantrieb 14 umfasst einen Motor 21 und ein zwischen dem Motor 21 und dem Schwenkarm vorgesehen aus einer ersten Getriebestufe 22 und eine zweiten Getriebestufe 23 bestehendes Schwenkgetriebe.

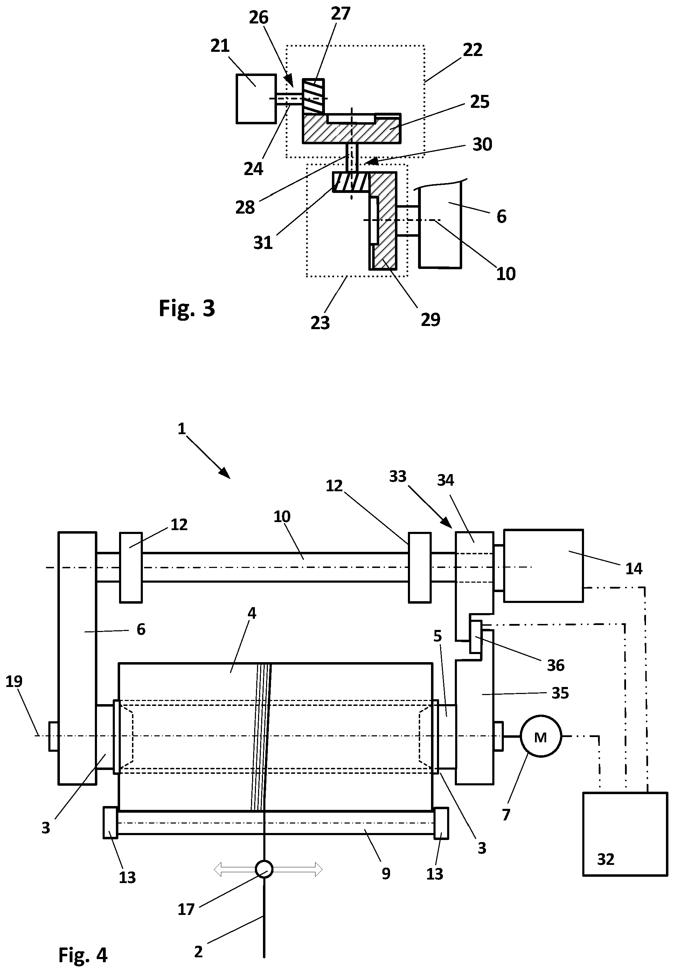

Figur 3 zeigt eine schematische Darstellung einer Ausführungsform eines Schwenkantriebes 14. Der Schwenkantrieb 14 umfasst einen Motor 21 sowie ein Schwenkgetriebe mit einer ersten Getriebestufe 22 und einer zweiten Getriebestufe 23. In der ersten getriebestufe 22 ist der Motor, respektive dessen Rotor, über eine Antriebsachse 24 mit einem ersten Ritzel 26 verbunden. Das erste Ritzel 26 weist ein auf einer Achse drehfest gehaltenes erstes verzahntes Zylinderrad 27. Das erste Zylinderrad 27 kann mit seiner Achse auch einstückig vorgesehen sein und ist drehfest mit der Antriebsachse 24 verbunden. Die Verzahnung des ersten Zylinderrades 27 greift in eine Verzahnung eines ersten Kronenrades 25 der ersten Getriebestufe 22. Die gezeigte 90 Grad Anordnung des ersten Ritzels 26 zum ersten Kronenrad 25 ist beispielhaft, es sind angepasst an konstruktive Gegebenheiten auch andere Anordnungen möglich. Das erste Kronenrad 25 der ersten Getriebestufe ist über eine mit der zweiten Getriebestufe 23 gemeinsamen Achse 28 verbunden. Die gemeinsame Achse 28 verbindet das erste Kronenrad 25 der ersten Getriebestufe 22 mit einem zweiten Ritzel 30 der zweiten Getriebestufe 23. Das zweite Ritzel 30 weist ein zweites verzahntes Zylinderrad 31 auf, welche mit seiner Verzahnung in ein zweites Kronenrad 29 respektive dessen Verzahnung eingreift. Das zweite Kronenrad 29 der zweiten Getriebestufe 23 ist in der Schwenkachse 10 drehfest mit dem Schwenkarm 6 verbunden. Die dargestellte Bauart des Schwenkgetriebes ist beispielhaft, beispielsweise können aus konstruktiven Gründen oder zu Erweiterung der Übersetzungsverhältnisse weitere Getriebestufen eingebaut oder eine Änderung der Winkellagen der verschiedenen Achsen zueinander vorgehen werden.

Figur 4 zeigt eine schematische Draufsicht einer zweiten Ausführungsform einer Spulvorrichtung 1 zur Spulung von einem Faden 2 oder einem Garn auf eine Spulenhülse 3 zur Bildung einer Spule 4. Die Spulvorrichtung 1 umfasst zwei sich in einer Spulenachse 19 gegenüberliegende Hülsenaufnahmen 5 welche je an einem Schwenkarm 6 und 33 drehbar gelagert ist. In der gezeigten Ausführungsform wird die eine Hülsenaufnahme 5 von einem ebenfalls am Schwenkarm 33 gehaltenen Spulenantrieb 7 in Drehung versetzt. Zwischen die Hülsenaufnahmen 5 wird eine Spulenhülse 3 eingesetzt, durch eine Spannvorrichtung (nicht gezeigt) wird die Spulenhülse 3 zwischen den Hülsenaufnahmen 5 drehfest gehalten, sodass über die am Schwenkarm 33 vorgesehene Hülsenaufnahme 5 auch die Spulenhülse 3 und damit die sich auf der Hülsenaufnahme 5 befindliche Spule 4 in Rotation werden. Während eines Spulvorganges wird die Spulenhülse 3 respektive die Spule 4 auf einer Stützwalze 9 abgestützt. Die Schwenkarm 6 und 33 sind mit einer Schwenkachse 10 an einem Maschinengestell durch eine entsprechende Abstützung 12 ortsfest gehalten und drehbar gelagert. An einem der Schwenkachse 10 gegenüberliegenden Ende des Schwenkarmes 33 ist die Hülsenaufnahme 5 mit dem zugehörigen Spulantrieb 7 befestigt. Die Stützwalze 9 ist in Supporten 13 drehbar im Maschinengestell gehalten. Die Stützwalze 9 ist mit ihrer Achse parallel zu einer äusseren Oberfläche der Spulenhülse 3 respektive der Spule 4 angeordnet. Die Schwenkarme 6 und 33 werden gemeinsam durch einen Schwenkantrieb 14 um die Schwenkachse 10 gedreht, was zur Folge hat, dass die Spulenhülse 3 in ihrem Abstand zur Stützwalze 9 verändert wird. Durch die Auflage der Spule 4 auf der Stützwalze 9 wird auch die Stützwalze 9 in eine Drehung in eine Drehung versetzt und der Faden 2 zur Bildung einer Spule 2 auf die Spulenhülse 3 aufgewickelt. Während dieses Aufwickelvorganges, der sogenannten Spulreise, wird mit einer Changierung 17 der Faden 2 entlang einer Spulenachse 19 der Spulenhülse 3 hin und her bewegt.

Während des Aufwickelvorganges wird der Faden 2 zwischen der Spulenhülse 3 respektive dem auf der Spulenhülse 3 bereits aufgewickelten Faden 2 und der Stützwalze 9 geklemmt, sodass sich eine enganliegende Wicklung auf der Spulenhülse 3 ergibt. Eine dabei aufgebrachte Klemmkraft respektive Auflagekraft 20 (siehe Figur 2) nimmt durch das Eigengewicht der grösser werdenden Spule 4 während eines Aufwickelvorganges ständig zu. Um eine konstante Auflagekraft 20 gewährleisten zu können werden durch den Schwenkantrieb 14 die Schwenkarm 6 um die Schwenkachse 10 bewegt und dadurch die Spule 4 von der Stützwalze 9 abgehoben. Dieses Abheben wird jedoch nur so weit ausgeführt, dass eine vorbestimmte Auflagekraft 20 zwischen der Spule 4 und der Stützwalze 9 bestehen bleibt. Der Schwenkantrieb 14 ist in der Schwenkachse 10 mit den Schwenkarmen 6 und 33 drehfest verbunden.

Zur Einhaltung der vorbestimmten Auflagekraft 20 ist der Schwenkarm 33 mit einer Kraftmessung 36 versehen. Dabei ist der Schwenkarm 33 in einen ersten Teilarm 34 und einen zweiten Teilarm 35 aufgeteilt. Die Kraftmessung 36 verbindet den ersten Teilarm 34 mit dem zweiten Teilarm 35, wodurch die durch die Auflagekraft 20 im Schwenkarm 33 hervorgerufenen Biegekräfte gemessen werden. Als Reaktion auf die Auflagekraft 20 und das Anheben der Spule 4 durch den Schwenkantrieb 14 ergibt sich eine Veränderung der an der Kraftmessung 35 anliegenden Kraft. Die Kraftmessung 15 wie auch der Schwenkantrieb 14 sind mit einer Steuerung 32 verbunden. Die mit der Kraftmessung 35 gemessene Kraft ist direkt proportional zur Aufliegekraft 20 zwischen der Spule 2 und der Stützwalze 3. In der Steuerung 32 werden die gemessenen Kräfte ausgewertet und mit der vorbestimmten Auflagekraft verglichen. Entsprechend wird der Schwenkantrieb 14 durch die Steuerung 32 geregelt und die Auflagekraft 20 auf einem konstanten Wert gehalten.

Die vorliegende Erfindung ist nicht auf die dargestellten und beschriebenen Ausführungsbeispiele beschränkt. Abwandlungen im Rahmen der Patentansprüche sind möglich.

### Bezugszeichenliste

- 1: Spulvorrichtung
- 2: Faden
- 3: Spulenhülse
- 4: Spule
- 5: Hülsenaufnahme
- 6: Schwenkarm
- 7: Spulenantrieb
- 8: Rotation
- 9: Stützwalze
- 10: Schwenkachse
- 11: Maschinengestell
- 12: Abstützung Schwenkarm
- 13: Support Stützwalze
- 14: Schwenkantrieb
- 15: Schwenkbewegung
- 16: Drehrichtung Stützwalze
- 17: Changierung
- 18: Spulendurchmesser
- 19: Spulenachse
- 20: Auflagekraft
- 21: Motor Schwenkantrieb
- 22: Erste Getriebestufe
- 23: Zweite Getriebestufe
- 24: Antriebsachse
- 25: Erstes Kronenrad
- 26: Erstes Ritzel
- 27: Erstes Zylinderrad
- 28: Gemeinsame Achse
- 29: Zweites Kronenrad
- 30: Zweites Ritzel
- 31: Zweites Zylinderrad
- 32: Steuerung
- 33: Zweiter Schwenkarm
- 34: Erster Teilarm
- 35: Zweiter Teilarm
- 36: Kraftmessung

## Patentansprüche

1. Spulvorrichtung (1) zum Aufspulen eines Fadens (2) auf eine Spulenhülse (3), mit zumindest einem Schwenkarm (6) mit einer Schwenkachse (10) und mit einer am Schwenkarm (6) angeordneten Hülsenaufnahme (5) und mit einer Stützwalze (9) zur Auflage der Spulenhülse (3), **dadurch gekennzeichnet, dass** ein Schwenkantrieb (14) zur Bewegung (15) des Schwenkarms (6) um die Schwenkachse (10) vorgesehen ist, wobei der Schwenkantrieb (14) eine Antriebsachse (24) und eine Schwenkachse (10) und einen in der Antriebsachse (24) angeordneten Motor (21) und eine erste Getriebestufe (22) und eine zweite Getriebestufe (22) mit einem Getriebeabgang in der Schwenkachse (10) aufweist, wobei beide Getriebestufen (22, 23) jeweils ein Kronenrad (25, 29) aufweisen.

2. Spulvorrichtung (1) nach Anspruch 1, **dadurch gekennzeichnet, dass** eine Verbindung zwischen dem Motor (21) und dem ersten Kronenrad (25) der ersten Getriebestufe (22) über ein erstes Ritzel (26) vorgesehen ist, wobei das erste Ritzel (26) verdrehsicher mit einem Rotor des Motors (21) verbunden ist.

3. Spulvorrichtung (1) nach zumindest einem der vorangehenden Ansprüche,
**dadurch gekennzeichnet, dass** die Kronenräder (25, 29) der ersten Getriebestufe (22) und der zweiten Getriebestufe (23) über ein zweites Ritzel (30) in Wirkverbindung stehen, wobei das erste Kronenrad (25) der ersten Getriebestufe (22) und das zweite Ritzel (30) der zweiten Getriebestufe (23) über eine gemeinsame Achse (28) verbunden sind.

4. Spulvorrichtung (1) nach zumindest einem der vorangehenden Ansprüche,
**dadurch gekennzeichnet, dass** der Motor (21) eine Winkelmessung aufweist.

5. Spulvorrichtung (1) nach zumindest einem der vorangehenden Ansprüche,
**dadurch gekennzeichnet, dass** eine Steuerung (32) vorgesehen ist, wobei in der Steuerung (32) eine Eingabe einer Garnstärke vorgesehen ist.

6. Spulvorrichtung (1) nach einem der Ansprüche 1 bis 4, **dadurch gekennzeichnet, dass** eine Kraftmessung (36) vorgesehen ist zur Messung einer auf den Schwenkarm (33) einwirkenden Auflagekraft (20).

7. Spulvorrichtung (1) nach Anspruch 6, **dadurch gekennzeichnet, dass** durch die Steuerung (32) aufgrund der Auflagekraft (20) eine Schwenkbewegung (15) des Schwenkarmes (33) um die Schwenkachse (10) bestimmt wird, derart, dass eine Auflagekraft (20) der Spule (4) auf der Stützwalze (9) konstant ist.

8. Spulvorrichtung (1) nach zumindest einem der vorangehenden Ansprüche,
**dadurch gekennzeichnet, dass** zwei Schwenkarme (6, 33) mit einer gemeinsamen Schwenkachse (10) und mit jeweils am Schwenkarm (6, 33) angeordneten Hülsenaufnahmen (5) und mit einer Stützwalze (9) zur Auflage der Spulenhülse (3) vorgesehen sind.

9. Spulmaschine mit zumindest einer Spulvorrichtung (1) nach zumindest einem der vorangehenden Ansprüche.

## Claims

1. Winding device (1) for winding a thread (2) onto a bobbin tube (3), comprising at least one pivot arm (6) having a pivot axis (10), a tube holder (5) arranged on the pivot arm (6), and a support roller (9) for supporting the bobbin tube (3),**characterized in that** a pivot drive (14) is provided for moving (15) the pivot arm (6) about the pivot axis (10), the pivot drive (14) having a drive axle (24), and a pivot axis (10), and a motor (21) arranged in the drive axle (24), and a first transmission stage (22), and a second transmission stage (22) having a transmission output in the pivot axis (10), the two transmission stages (22, 23) each having a crown gear (25, 29).

2. Winding device (1) according to claim 1, **characterized in that** a connection between the motor (21) and the first crown gear (25) of the first transmission stage (22) is provided via a first pinion (26), the first pinion (26) being connected to a rotor of the motor (21) in a rotationally secured manner.

3. Winding device (1) according to at least one of the preceding **claims,characterized in that** the crown gears (25, 29) of the first transmission stage (22) and of the second transmission stage (23) are operatively connected via a second pinion (30), the first crown gear (25) of the first transmission stage (22) and the second pinion (30) of the second transmission stage (23) being connected via a common axle (28).

4. Winding device (1) according to at least one of the preceding claims,
**characterized in that** the motor (21) has an angle measurement.

5. Winding device (1) according to at least one of the preceding claims,
**characterized in that** a controller (32) is provided, an input of a yarn thickness being provided in the controller (32).

6. Winding device (1) according to any of claims 1 to 4,
**characterized in that** a force measurement (36) is provided for measuring a contact force (20) acting on the pivot arm (33).

7. Winding device (1) according to claim 6, **characterized in that** a pivot movement (15) of the pivot arm (33) about the pivot axis (10) is determined by the controller (32) based on the contact force (20) such that a contact force (20) of the bobbin (4) on the support roller (9) is constant.

8. Winding device (1) according to at least one of the preceding claims,
**characterized in that** two pivot arms (6, 33) are provided having a common pivot axis (10) and each having tube holders (5) arranged on the pivot arm (6, 33) and having a support roller (9) for supporting the bobbin tube (3).

9. Winding machine comprising at least one winding device (1) according to at least one of the preceding claims.

## Revendications

1. Dispositif de bobinage (1) permettant le bobinage d'un fil (2) sur un tube de bobine (3), comportant au moins un bras pivotant (6) comportant un axe de pivotement (10) et comportant un logement pour tube (5) disposé sur le bras pivotant (6) et comportant un cylindre de soutien (9) pour l'appui du tube de bobine (3), **caractérisé en ce qu'**un entraînement pivotant (14) est prévu pour le mouvement (15) du bras pivotant (6) autour de l'axe de pivotement (10), dans lequel l'entraînement pivotant (14) présente un axe d'entraînement (24) et un axe de pivotement (10) et un moteur (21) disposé dans l'axe d'entraînement (24) et un premier étage de transmission (22) et un second étage de transmission (22) comportant une sortie de transmission dans l'axe de pivotement (10), dans lequel les deux étages de transmission (22, 23) présentent respectivement une couronne dentée (25, 29).

2. Dispositif de bobinage (1) selon la revendication 1,
**caractérisé en ce qu'**une liaison entre le moteur (21) et la première couronne dentée (25) du premier étage de transmission (22) est prévue par l'intermédiaire d'un premier pignon (26), dans lequel le premier pignon (26) est relié de manière à ne pas pouvoir tourner à un rotor du moteur (21).

3. Dispositif de bobinage (1) selon au moins l'une des revendications précédentes, **caractérisé en ce que** les couronnes dentées (25, 29) du premier étage de transmission (22) et du second étage de transmission (23) sont en liaison active par l'intermédiaire d'un second pignon (30), dans lequel la première couronne dentée (25) du premier étage de transmission (22) et le second pignon (30) du second étage de transmission (23) sont reliés par l'intermédiaire d'un axe commun (28).

4. Dispositif de bobinage (1) selon au moins l'une des revendications précédentes, **caractérisé en ce que** le moteur (21) présente une mesure angulaire.

5. Dispositif de bobinage (1) selon au moins l'une des revendications précédentes, **caractérisé en ce qu'**une commande (32) est prévue, dans lequel une entrée d'une épaisseur de fil est prévue dans la commande (32).

6. Dispositif de bobinage (1) selon l'une des revendications 1 à 4,
**caractérisé en ce qu'**une mesure de force (36) est prévue pour la mesure d'une force d'appui (20) agissant sur le bras pivotant (33).

7. Dispositif de bobinage (1) selon la revendication 6,
**caractérisé en ce qu'**un mouvement de pivotement (15) du bras pivotant (33) autour de l'axe de pivotement (10) est déterminé par la commande (32) sur la base de la force d'appui (20), de telle sorte qu'une force d'appui (20) de la bobine (4) sur le cylindre de soutien (9) est constante.

8. Dispositif de bobinage (1) selon au moins l'une des revendications précédentes, **caractérisé en ce que** sont prévus deux bras pivotants (6, 33) comportant un axe de pivotement (10) commun et comportant des logements pour tubes (5) disposés respectivement sur le bras pivotant (6, 33) et comportant un cylindre de soutien (9) pour l'appui du tube de bobine (3).

9. Machine de bobinage comportant au moins un dispositif de bobinage (1) selon au moins l'une des revendications précédentes.
